# EUROPEAN PATENT APPLICATION

(11) **EP 4 614 038 A1**
(43) Date of publication of application: **10.09.2025**
(21) Application number: 23896899.4
(22) Date of filing: 30.11.2023
(51) Int. Cl.: F16K 11/10

(54) **MULTI-WAY VALVE**

(30) Priority: 30.11.2022 CN 202211521281; 30.11.2022 CN 202223231722 U
(71) Applicant: Zhejiang Dunan Artificial Environment Co., Ltd., Shaoxing Zhejiang 311835 (CN)
(72) Inventor: ZHOU, Xiaowei, Shaoxing, Zhejiang 311835 (CN); CHEN, Yutao, Shaoxing, Zhejiang 311835 (CN)
(74) Representative: Inchingalo, Simona
(86) International application number: PCT/CN2023/135597
(87) International publication number: WO 2024/114757

(57) **Abstract**

A multi-way valve is provided, including: a valve seat, the valve seat being provided with a valve chamber and a plurality of valve ports; a first valve core, arranged in the valve chamber, a plurality of sub-chambers being distributed in the first valve core, wherein when the first valve core rotates, different sub-chambers can be switched to be in communication with at least one corresponding valve port of the plurality of valve ports, respectively; and a second valve core, arranged in the valve chamber, the second valve core being provided with a flow diversion chamber, the flow diversion chamber being in communication with at least one of the plurality of sub-chambers, wherein the flow diversion chamber can be in communication with two valve ports of the plurality of valve ports, and when the second valve core rotates, a ratio of fluid conveyed from the flow diversion chamber to the two valve ports in communication with the flow diversion chamber can be adjusted. By the solution, two valve cores are provided in the valve seat, multiple types of flow path switching can be achieved by a cooperation of the two valve cores, and the flow diversion chamber in the second valve core can be in communication with two valve ports, and by rotating the second valve core, the ratio of fluid conveyed from the flow diversion chamber to the two valve ports can be adjusted. Therefore, the multi-way valve also has the function of adjusting the flow ratio, thereby enriching scenarios where the multi-way valve is applied.

## Description

The present invention claims priority to patent application no. 202211521281.6, entitled "Multi-Way Valve", and filed to the China National Intellectual Property Administration on November 30, 2022, and claims priority to patent application no. 202223231722.7, entitled "Multi-Way Valve", and filed to the China National Intellectual Property Administration on November 30, 2022.

### Technical Field

The present invention relates to the technical field of multi-way valves, and in particular, to a multi-way valve.

### Background

A multi-way valve (e.g. a water valve in a vehicle) mainly includes structures such as a valve seat and a valve core, wherein the valve seat is provided with a plurality of valve ports, and the valve core is provided with a plurality of sub-chambers. By adjusting a position of the valve core, different sub-chamber of the plurality of sub-chambers is in communication with at least one valve port of the plurality of valve ports, thereby achieving switching between different flow paths. An existing multi-way valves generally have only one valve core, and provide few modes of flow path switching. Some multi-way valves are provided with two valve cores, and by means of a cooperation of the two valve cores, flow path switching for more modes can be achieved. However, such multi-way valves do not have a function of adjusting a ratio of fluid outputted to different valve ports, and the application scenarios are still limited.

### Summary

Some embodiments of the present invention provide a multi-way valve, which allows the multi-way valve to have a function of adjusting a flow ratio, thereby enriching scenarios where the multi-way valve can be applied.

In order to achieve the described object, some embodiments of the present invention provide a multi-way valve, comprising: a valve seat, the valve seat being provided with a valve chamber and a plurality of valve ports; a first valve core, arranged in the valve chamber, a plurality of sub-chambers being distributed in the first valve core, wherein when the first valve core rotates, different sub-chambers can be switched to be in communication with at least one corresponding valve port of the plurality of valve ports; and a second valve core, arranged in the valve chamber, the second valve core being provided with a flow diversion chamber, the flow diversion chamber being in communication with at least one of the plurality of sub-chambers, and wherein the flow diversion chamber can be in communication with two valve ports of the plurality of valve ports, and when the second valve core rotates, a ratio of fluid conveyed from the flow diversion chamber to the two valve ports in communication with the flow diversion chamber can be adjusted.

Further, a area of an opening of the flow diversion chamber is larger than a sum of the areas of the two valve ports in communication with the flow diversion chamber; and the two valve ports in communication with the flow diversion chamber and the opening of the flow diversion chamber are all arranged along a circumferential direction of the second valve core, and when the second valve core rotates, the ratio of fluid is adjusted by adjusting an overlapping area between the opening of the flow diversion chamber and the two valve ports.

Further, the first valve core is sequentially provided with multiple layers of circulation chambers along an axial direction thereof, and each layer of the circulation chambers is divided into the plurality of sub-chambers along a circumferential direction of the first valve core; wherein at least one sub-chamber of a circulation chamber adjacent to the flow diversion chamber is in communication with the flow diversion chamber, or at least one sub-chamber of a circulation chamber spaced apart from the flow diversion chamber is in communication with the flow diversion chamber.

Further, the plurality of valve ports of the valve seat are divided into at least two valve port groups arranged side by side, and a plurality of valve ports in each of the at least two valve port groups are arranged at intervals along the axial direction of the first valve core; and four to eight sub-chambers are provided in each circulation chamber of the first valve core.

Further, the first valve core and the second valve core are coaxially arranged, the first valve core has an inner passage extending in an axial direction thereof, and an end of the inner passage is in communication with an inlet of the flow diversion chamber, and at least one of the plurality of sub-chambers is in communication with the inner passage; and the multi-way valve further includes a first sealing ring, wherein the first sealing ring is located between the first valve core and the second valve core, and the first sealing ring is arranged around the inner passage and the inlet of the flow diversion chamber.

Further, the multi-way valve further includes a rotating shaft and a shaft sleeve, wherein a part of the rotating shaft is arranged in the first valve core, the rotating shaft passes through the second valve core, a part of the shaft sleeve is arranged in the second valve core, and the shaft sleeve is sleeved on the rotating shaft, the rotating shaft is configured to drive the first valve core to rotate, and the shaft sleeve is configured to drive the second valve core to rotate; and the multi-way valve further includes a second sealing ring, wherein the second sealing ring is sleeved on the rotating shaft, a first side of the second sealing ring abuts against the first valve core, and a second side of the second sealing ring abuts against the shaft sleeve or the second valve core.

Further, the multi-way valve further includes a valve cover, a third sealing ring and a fourth sealing ring, wherein the valve cover and the valve seat are connected to block an opening of the valve chamber, the third sealing ring is arranged between a periphery edge of the opening of the valve chamber and the valve cover, the rotating shaft and the shaft sleeve pass through the valve cover, the fourth sealing ring is sleeved on the shaft sleeve, and the fourth sealing ring is in sealing fit with both the shaft sleeve and the valve cover.

Further, the second valve core includes an outer cylinder, an inner cylinder and a connecting plate, wherein the inner cylinder is located in the outer cylinder and is coaxially arranged with the outer cylinder, and the connecting plate is connected to both the outer cylinder and the inner cylinder; and the flow diversion chamber includes input chambers and an output chamber in communication with each other, wherein a region between an outer surface of the inner cylinder, an inner surface of the outer cylinder and the connecting plate form the input chambers, the input chambers are in communication with at least one of the plurality of sub-chambers, and the output chamber is located in a side wall of the outer cylinder, an opening of the output chamber is located on an outer surface of the outer cylinder, and the output chamber can communicate with two of the plurality of valve ports.

Further, the connecting plate includes a first plate body and a second plate body which are arranged in parallel, wherein the first plate body and the second plate body are connected to two sides of the inner cylinder respectively, and the first plate body and the second plate body are both connected to the inner surface of the outer cylinder; and there are two input chambers, and the two input chambers are symmetrically arranged with respect to a plane where the first plate body and the second plate body are located.

Further, the second valve core further includes a sealing plate and a partition plate, wherein the sealing plate blocks a side of the outer cylinder facing away from the first valve core; and the partition plate is located in the output chamber, and the partition plate divides the output chamber into two parts.

Further, the multi-way valve further includes a valve cover, a first limiting member and a second limiting member, wherein the valve cover and the valve seat are connected to block the opening of the valve chamber, the first limiting member is provided on the valve cover, the second limiting member is provided on the second valve core, and the first limiting member and the second limiting member are in stop fit in a circumferential direction of the second valve core.

Further, the multi-way valve further includes a sealing gasket, wherein the sealing gasket is arranged on an inner wall of the valve chamber, and the first valve core and the second valve core both fit with the sealing gaskets.

Further, first sealing ribs are provided on periphery edges of the openings of the sub-chambers, and in cases where the sub-chambers are in communication with the valve ports, the first sealing ribs on the periphery edge of the sub-chambers abut against the sealing gasket; and a second sealing rib is provided at the periphery edge of the opening of the flow diversion chamber, and the second sealing rib at the periphery edge of the flow diversion chamber is attached to the sealing gasket.

By using the technical solutions of some embodiments of the present invention, provided a multi-way valve, comprising: a valve seat, the valve seat being provided with a valve chamber and a plurality of valve ports; a first valve core, arranged in the valve chamber, a plurality of sub-chambers being distributed in the first valve core, wherein when the first valve core rotates, different sub-chambers can be switched to be respectively communicated with at least one corresponding valve port of the plurality of valve ports, and a second valve core, arranged in the valve chamber, the second valve core being provided with a flow diversion chamber, the flow diversion chamber being in communication with at least one of the plurality of sub-chambers, wherein the flow diversion chamber can be in communication with two valve port of the plurality of valve ports, and when the second valve core rotates, a ratio of fluid conveyed from the flow diversion chamber to the two valve ports in communication with the flow diversion chamber can be adjusted. By the solution, two valve cores are provided in the valve seat, multiple types of flow path switching can be achieved by a cooperation of the two valve cores, and the flow diversion chamber in the second valve core can be in communication with two valve ports, and by rotating the second valve core, the ratio of fluid conveyed from the flow diversion chamber to the two valve ports can be adjusted. Therefore, the multi-way valve also has the function of adjusting the flow ratio, thereby enriching scenarios where the multi-way valve can be applied.

### Brief Description of the Drawings

The drawings of the description, constituting a part of the present invention, are used for providing further understanding of the present invention, and the illustrative embodiments of the present invention and illustrations thereof are used for explaining the present invention, rather than constitute inappropriate limitation on the present invention. In the drawings:
Fig. 1 shows an exploded view of a multi-way valve provided according to embodiments of the present invention;
Fig. 2 shows a side view of a multi-way valve provided according to embodiments of the present invention;
Fig. 3 shows a sectional view of the multi-way valve in Fig.2 along B-B;
Fig. 4 shows a sectional view of the multi-way valve in Fig. 2 along a radial direction of a second valve core;
Fig. 5 shows a sectional view of the multi-way valve in Fig.2 along A-A;
Fig. 6 shows a perspective view of a second valve core in Fig. 1;
Fig. 7 shows a schematic view of the second valve core in Fig. 6 being located on a side;
Fig. 8 shows a schematic view of the second valve core in Fig. 6 being located on the other side;
Fig. 9 shows a perspective view of a first valve core in Fig. 1;
Fig. 10 shows a sectional view of the multi-way valve in Fig.2 along C-C;
Fig. 11 shows a schematic view of a sealing gasket in Fig. 1;
Fig. 12 shows a schematic view of assembly of the sealing gasket and a valve seat in Fig. 1;
Fig. 13 is a schematic view of assembly of the sealing gasket, the first valve core, and the second valve core in Fig. 1;
Fig. 14 shows an exploded view of a multi-way valve provided according to still some embodiments of the present invention;
Fig. 15 shows a side view of the multi-way valve of Fig. 14;
Fig. 16 shows a sectional view of the multi-way valve of Fig. 15 in the D-D position;
Fig. 17 shows a sectional view of the multi-way valve of Fig. 15 in the E-E position;
Fig. 18 shows a sectional view of the multi-way valve in Fig. 15 in a radial direction;
Fig. 19 shows a schematic view of a first sealing gasket in Fig. 14; and
Fig. 20 shows a schematic view of a valve seat in Fig. 14.

The figures include the following reference signs: 10. Valve seat; 11. Valve port; 12. First arcuate groove; 13. Second arcuate groove; 20. First valve core; 21. Sub-chamber; 22. Inner passage; 23. First sealing rib; 24. Third sealing rib; 30. Second valve core; 31. Flow diversion chamber; 311. Input chamber; 312. Output chamber; 32. Outer cylinder; 321. Straight rib; 33. Inner cylinder; 34. Connecting plate; 341. First plate body; 342. Second plate body; 35. Sealing plate; 36. Partition plate; 37. Second sealing rib; 41. First sealing ring; 42. Second sealing ring; 43. Third sealing ring; 44. Fourth sealing ring; 51. Rotating shaft; 52. Shaft sleeve; 53. First limiting ring; 54. Second limiting ring; 61. Valve cover; 62. Second limiting member; 70. Sealing gasket; 71. Transverse raised rib; 72. Longitudinal raised rib; 81. First sub-sealing gasket; 811. Through hole; 812. Sub-transverse raised rib; 813. Sub-longitudinal raised rib; 82. Second sub-sealing gasket.

### Detailed Description of the Embodiments

The technical solutions in embodiments of the present invention will be clearly and completely described below with reference to the accompanying drawings in the embodiments of the present invention. Obviously, the embodiments as described are only parts of embodiments rather than all the embodiments of the present invention. The following description of at least one exemplary embodiment is merely illustrative in nature, and is in no way intended to limit the present invention and any applications or uses thereof. All other embodiments obtained by a person of ordinary skill in the art on the basis of the embodiments of the present invention without involving any inventive effort shall all fall within the scope of protection of the present invention.

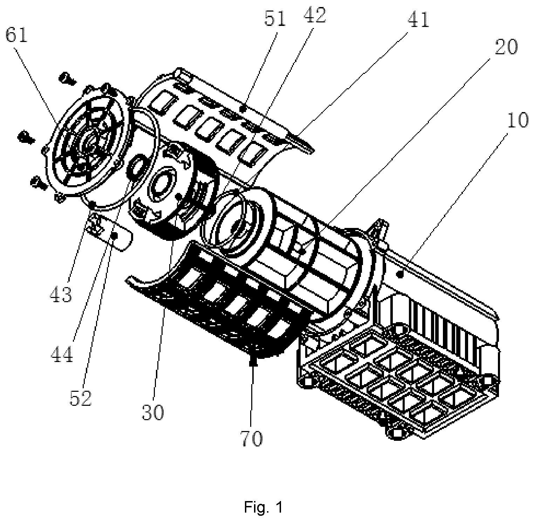

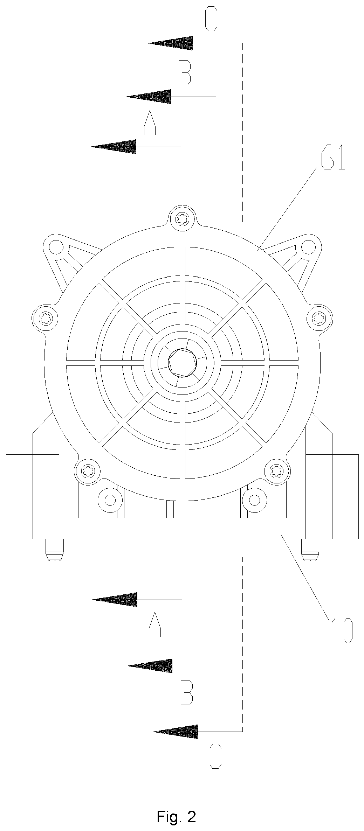

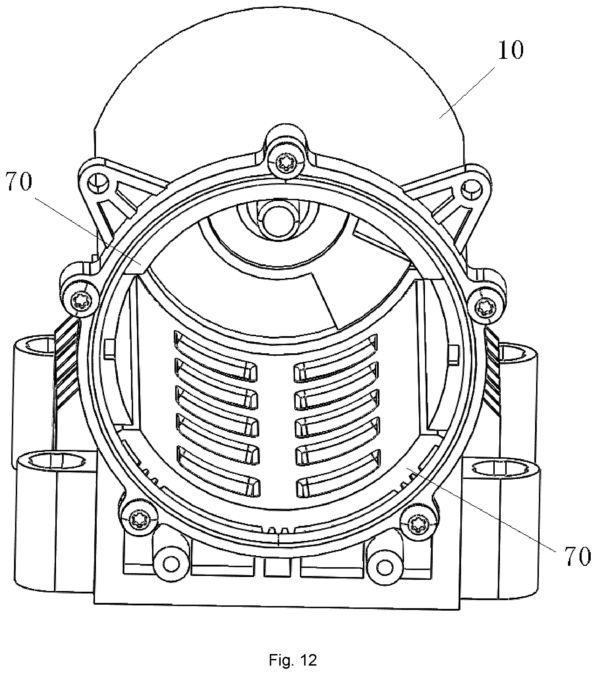

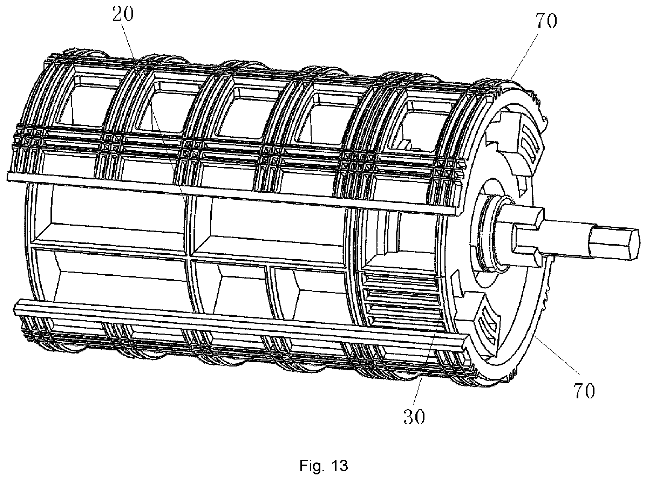

As shown in Figs. 1-13, embodiments of the present invention provide a multi-way valve, comprising: a valve seat 10, the valve seat 10 being provided with a valve chamber and a plurality of valve ports 11; a first valve core 20, arranged in the valve chamber, a plurality of sub-chambers 21 being distributed in the first valve core 20, wherein when the first valve core 20 rotates, different sub-chambers 21 can be switched to be respectively communicated with at least one corresponding valve port of the plurality of valve ports 11, and a second valve core 30, arranged in the valve chamber, the second valve core 30 being provided with a flow diversion chamber 31, the flow diversion chamber 31 being in communication with at least one of the plurality of sub-chambers 21, wherein the flow diversion chamber 31 can be in communication with two valve ports of the plurality of valve ports 11, and when the second valve core 30 rotates, a ratio of fluid conveyed from the flow diversion chamber 31 to the two valve ports 11 in communication with the flow diversion chamber can be adjusted.

By the solution, two valve cores are provided in the valve seat 10, multiple types of flow path switching can be achieved by a cooperation of the two valve cores, and the flow diversion chamber 31 in the second valve core 30 can be in communication with two valve ports 11, and by rotating the second valve core 30, the ratio of fluid conveyed from the flow diversion chamber 31 to the two valve ports 11 can be adjusted. Therefore, the multi-way valve also has a function of adjusting the flow ratio, thereby enriching scenarios where the multi-way valve can be applied.

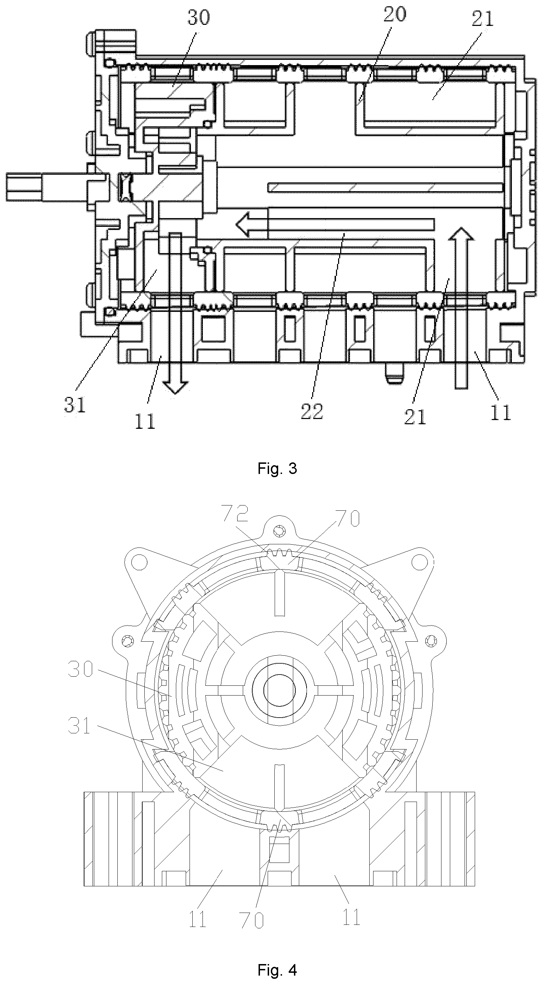

As shown in Fig. 3 and Fig. 4, the two valve ports 11 in communication with the flow diversion chamber 31 and an opening of the flow diversion chamber 31 are all arranged along a circumferential direction of the second valve core 30; and when the second valve core 30 rotates, an overlapping area between the opening of the flow diversion chamber 31 and the two valve ports 11 changes, such that the ratio of fluid is adjusted by adjusting the overlapping area between the opening of the flow diversion chamber 31 and the two valve ports 11. In this way, continuous adjustment of the ratio of fluid conveyed to the two valve ports 11 can be achieved. In some embodiments, the area of the opening of the flow diversion chamber 31 is larger than a sum of the areas of the two valve ports 11 in communication with the flow diversion chamber.

In the present embodiment, the first valve core 20 is sequentially provided with multiple layers of circulation chambers along an axial direction thereof, and each layer of the circulation chambers is divided into the plurality of sub-chambers 21 along a circumferential direction of the first valve core 20; wherein at least one sub-chamber 21 of a circulation chamber adjacent to the flow diversion chamber 31 is in communication with the flow diversion chamber 31, or at least one sub-chamber 21 of a circulation chamber spaced apart from the flow diversion chamber 31 is in communication with the flow diversion chamber 31. In cases where at least one sub-chamber 21 of a circulation chamber adjacent to the flow diversion chamber 31 is in communication with the flow diversion chamber 31, a flow path length can be reduced, and a resistance of fluid conveying can be reduced.

In some embodiments, the plurality of valve ports 11 of the valve seat 10 are divided into at least two valve port groups arranged side by side, and a plurality of valve ports 11 in each of the at least two valve port groups are arranged at intervals along the axial direction of the first valve core 20; for example, there are two valve port groups, and five valve ports 11 are arranged in each of the two valve port groups. Four to eight sub-chambers 21 are provided in each circulation chamber of the first valve core 20. Compared with the structure of one existing valve core, in this solution, the number of sub-chambers 21 of the first valve core 20 is small, and an overall volume of the first valve core 20 can be reduced. That is, in cases where the volume of the first valve core 20 is small, circulation of a plurality of modes can be achieved by the cooperation between the first valve core 20 and the second valve core 30.

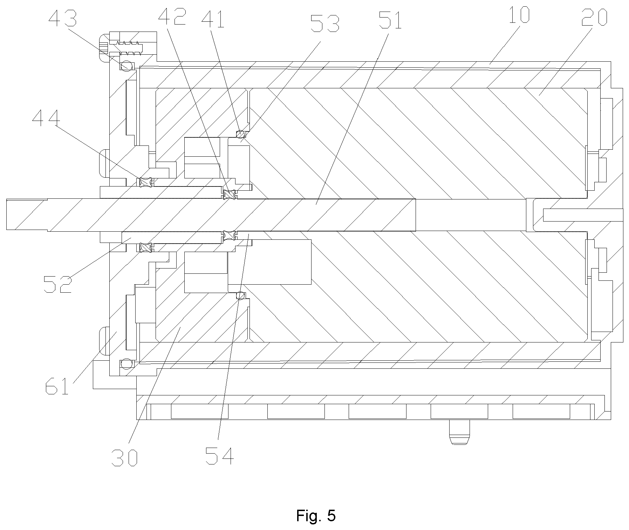

As shown in Fig. 3 and Fig. 5, the first valve core 20 and the second valve core 30 are coaxially arranged, the first valve core 20 has an inner passage 22 extending in an axial direction thereof, and an end of the inner passage 22 is in communication with an inlet of the flow diversion chamber 31, and at least one of the plurality of sub-chambers 21 is in communication with the inner passage 22; in this way, the sub-chamber 21 is in communication with the flow diversion chamber 31 through the inner passage 22. The multi-way valve further includes a first sealing ring 41, wherein the first sealing ring 41 is located between the first valve core 20 and the second valve core 30, and the first sealing ring 41 is arranged around the inner passage 22 and the inlet of the flow diversion chamber 31. The first sealing ring 41 can prevent fluid of the inner passage 22 of the first valve core 20 from flowing out of a gap between the first valve core 20 and the second valve core 30, and can also prevent fluid located inside the valve seat 10 and outside the two valve cores from entering the valve cores from the gap between the first valve core 20 and the second valve core 30.

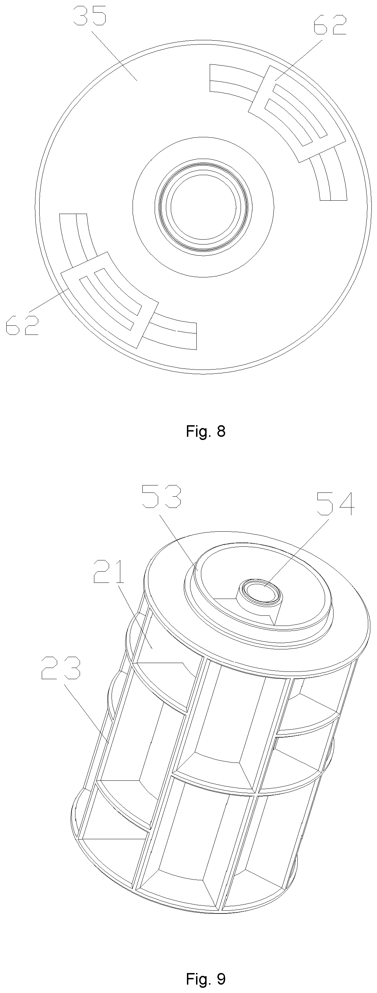

In some embodiments, as shown in Fig. 5 and Fig. 9, an end of the first valve core 20 is provided with a first limiting ring 53, and the first limiting ring 53 penetrates into the second valve core 30, the first limiting ring 53 is provided with a first annular step, the second valve core 30 is internally provided with a second annular step, wherein a peripheral surface of the first annular step is disposed opposite to a peripheral surface of the second annular step, and a bottom surface of the first annular step is disposed opposite to a bottom surface of the second annular step; and the first sealing ring 41 is sandwiched in a region surrounded by the peripheral surface of the first annular step, the peripheral surface of the second annular step, the bottom surface of the first annular step and the bottom surface of the second annular step, and in this way, the first sealing ring 41 is limited, thereby ensuring the sealing effect.

In the present embodiment, the multi-way valve further includes a rotating shaft 51 and a shaft sleeve 52, wherein a part of the rotating shaft 51 is arranged in the first valve core 20, the rotating shaft 51 passes through the second valve core 30, a part of the shaft sleeve 52 is arranged in the second valve core 30, and the shaft sleeve 52 is sleeved on the rotating shaft 51, the rotating shaft 51 is configured to drive the first valve core 20 to rotate, and the shaft sleeve 52 is configured to drive the second valve core 30 to rotate; and the multi-way valve further includes a second sealing ring 42, wherein the second sealing ring 42 is sleeved on the rotating shaft 51, a first side of the second sealing ring 42 abuts against the first valve core 20, and a second side of the second sealing ring 42 abuts against the shaft sleeve 52 or the second valve core 30. By providing the second sealing ring 42, fluid can be prevented from leaking from a gap between the first valve core 20 and the rotating shaft 51, and fluid can be prevented from leaking from a gap between the second valve core 30 and the rotating shaft 51, thereby improving the sealing effect.

In some embodiments, a second limiting ring 54 is provided at an end of the first valve core 20, and the second limiting ring 54 is provided around the rotating shaft 51; the second valve core 30 is internally provided with a first hole section and a second hole section in communication with each other, and a diameter of the first hole section is greater than a diameter of the second hole section, the shaft sleeve 52 penetrates into the first hole section, an end of the shaft sleeve 52 and an end face of the second hole section are in stop fit, and the second limiting ring 54 penetrates into the second hole section; and the second sealing ring 42 is located in a region surrounded by an inner wall of the second hole section, an outer wall of the rotating shaft 51, an end face of the shaft sleeve 52 and an end face of the second limiting ring 54, and in this way, the second limiting ring 54 is reliably limited, thereby improving the sealing effect.

A first annular rib protrudes from an end face of the shaft sleeve 52, the first annular rib abuts against a first side of the second sealing ring 42; and a second annular rib protrudes from an end face of the second limiting ring 54, and the second annular rib abuts against a second side of the second sealing ring 42. In this way, a better sealing effect can be achieved.

In some embodiments, the multi-way valve further includes a valve cover 61, a third sealing ring 43 and a fourth sealing ring 44, wherein the valve cover 61 and the valve seat 10 are connected to block an opening of the valve chamber, the third sealing ring 43 is arranged between a periphery edge of the opening of the valve chamber and the valve cover 61, the rotating shaft 51 and the shaft sleeve 52 pass through the valve cover 61, the fourth sealing ring 44 is sleeved on the shaft sleeve 52, and the fourth sealing ring 44 is in sealing fit with both the shaft sleeve 52 and the valve cover 61. In this way, a gap between the valve cover 61 and the valve seat 10 is sealed, and a gap between the valve cover 61 and the shaft sleeve 52 is sealed, thereby preventing fluid from leaking from the gaps. The first sealing ring 41 and the third sealing ring 43 are O-shaped sealing rings, and the second sealing ring 42 and the fourth sealing ring 44 are X-shaped sealing rings.

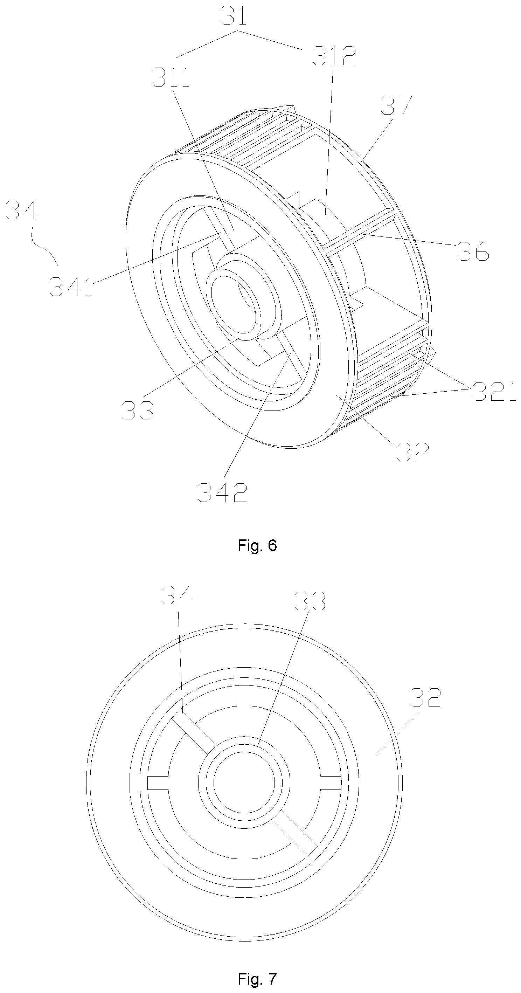

As shown in Figs. 6-8, the second valve core 30 includes an outer cylinder 32, an inner cylinder 33 and a connecting plate 34, wherein the inner cylinder 33 is located in the outer cylinder 32 and is coaxially arranged with the outer cylinder 32, and the connecting plate 34 is connected to both the outer cylinder 32 and the inner cylinder 33; and the flow diversion chamber 31 includes input chambers 311 and an output chamber 312 in communication with each other, wherein a region between an outer surface of the inner cylinder 33, an inner surface of the outer cylinder 32 and the connecting plate 34 form the input chambers 311, the input chambers 311 are in communication with at least one of the plurality of sub-chambers 21, and the output chamber 312 is located in a side wall of the outer cylinder 32, an opening of the output chamber 312 is located on an outer surface of the outer cylinder 32, and the output chamber 312 can be in communication with two valve ports 11. The input chambers 311 are used for communicating with the sub-chamber 21 to realize fluid input, and the output chamber 312 is in communication with the valve ports 11 to realize circulation flow output and flow ratio adjustment. An opening direction of the input chambers 311 is an axial direction of the second valve core 30, and an opening direction of the output chamber 312 is a radial direction of the second valve core 30, and in this way, the fluid direction is changed.

In some embodiments, the connecting plate 34 includes a first plate body 341 and a second plate body 342 which are arranged in parallel, wherein the first plate body 341 and the second plate body 342 are connected to two sides of the inner cylinder 33 respectively, and the first plate body 341 and the second plate body 342 are both connected to the inner surface of the outer cylinder 32; and there are two input chambers 311, and the two input chambers 311 are symmetrically arranged with respect to a plane where the first plate body 341 and the second plate body 342 are located. Compared with the arrangement of a plurality of plate body structures in the related art, the structure arrangement of two plate bodies in the present solution can ensure that the fluid has a maximum accommodating chamber when entering the second valve core 30, thereby reducing the resistance loss of the fluid between an inlet and an outlet of the flow diversion chamber 31.

The second valve core 30 further includes a sealing plate 35 and a partition plate 36, wherein the sealing plate 35 blocks a side of the outer cylinder 32 facing away from the first valve core 20, and in this way, the side of the outer cylinder 32 away from the first valve core 20 is a closed structure, preventing leakage. The partition plate 36 is located in the output chamber 312, and the partition plate 36 divides the output chamber 312 into two symmetrical parts. In this way, the partition plate 36 can achieve diversion of fluid outputted from the output chamber 312, and the partition plate 36 also has the functions of structural support and ensuring the strength.

Optionally, in the present embodiment, the multi-way valve further includes a valve cover 61, a first limiting member and a second limiting member 62, wherein the valve cover 61 and the valve seat 10 are connected to block an opening of the valve chamber, the first limiting member is provided on the valve cover 61, the second limiting member 62 is provided on the second valve core 30, and the first limiting member and the second limiting member 62 are in stop fit in the circumferential direction of the second valve core 30. The rotation range of the second valve core 30 can be defined by a cooperation of the first limiting member and the second limiting member 62.

The cooperation of the first limiting member and the second limiting member can be divided into the following three situations:
When there is one limiting member on the second valve core 30 and there is one limiting member on the valve cover 61, a position where the limiting member of the second valve core 30 abuts against the limiting member of the valve cover 61 is defined as a zero-point position, and then the second valve core 30 rotates in a direction away from the limiting member of the valve cover 61, until the limiting member of the second valve core 30 abuts against the limiting member of the valve cover 61, and then the second valve core 30 rotates back in a reverse direction. In this case, the second valve core 30 has a large rotation angle from the zero-point position to the position where the second valve core starts to rotate back in a reverse direction.

When there are two limiting members symmetrically arranged on the second valve core 30 and there is one corresponding limiting member on the valve cover 61, a position where one limiting member of the two limiting members of the second valve core 30 abuts against the limiting member of the valve cover 61 is defined as a zero-point position, and then the second valve core 30 rotates in a direction away from the limiting member of the valve cover 61, until the other limiting member of the two limiting members of the second valve core 30 abuts against the limiting member of the valve cover 61, and then the second valve core 30 rotates back in a reverse direction. By providing two limiting members on the second valve core 30, the rotation angle of the second valve core 30 from the zero-point position to the position where the second valve core starts to rotate back in a reverse direction can be reduced.

When there is one limiting member on the second valve core 30 and there are two corresponding limiting members on the valve cover 61, a position where the limiting member of the second valve core 30 abuts against one limiting member of the two limiting members of the valve cover 61 is defined as a zero-point position, and then the second valve core 30 rotates in a direction away from the limiting member of the valve cover 61, until the limiting member of the second valve core 30 abuts against the other limiting member of the two limiting members of the valve cover 61, and then the second valve core 30 rotates back in a reverse direction. By providing two limiting members on the valve cover 61, the rotation angle of the second valve core 30 from the zero-point position to the position where the second valve core starts to rotate back in a reverse direction can be reduced. By providing two limiting members on the valve cover 61, a stability of a structure of the limiting members can be ensured.

As shown in Figs. 1 and 10-13, the multi-way valve further includes sealing gasket 70, wherein the sealing gasket 70 is arranged on an inner wall of the valve chamber, and the first valve core 20 and the second valve core 30 both fit with the sealing gasket 70. By providing the sealing gasket 70, assembly gap can be sealed to prevent fluid leakage.

First sealing ribs 23 are provided on periphery edges of openings of the sub-chambers 21, and in cases where the sub-chambers 21 are in communication with the valve ports 11, the first sealing ribs 23 on the periphery edge of the sub-chambers 21 abut against the sealing gasket 70; and a second sealing rib 37 is provided at periphery edge of the opening of the flow diversion chamber 31, and the second sealing rib 37 at the periphery edge of the flow diversion chamber 31 is attached to the sealing gasket 70. By means of the described arrangement, reliable sealing of the periphery edges of the openings of the sub-chambers 21 and reliable sealing of the periphery edge of the opening of the flow diversion chamber 31 can be achieved.

In some embodiments, an outer peripheral surface of the outer cylinder 32 is provided with a plurality of straight ribs 321 arranged side by side in the circumferential direction, each of the plurality of straight ribs 321 extends along the axial direction of the outer cylinder 32, and the straight ribs 321 are used for sealing fit with the sealing gasket 70, thereby improving the sealing effect for the opening of the flow diversion chamber 31.

Optionally, there are two sealing gaskets 70, the two sealing gaskets 70 are arranged opposite each other, and the first valve core 20 and the second valve core 30 are located between the two sealing gaskets 70. Compared with the related art, the two opposite sealing gaskets have better sealing and limiting effects on the valve cores, and thus even if the fluid flow in the valve cores is large or the rotating shaft fitted with the valve cores is worn, the valve cores are not easily eccentric, and therefore the fluid does not easily leak, thereby improving the sealing performance of the multi-way valve.

In the present embodiment, the two sealing gaskets 70 are arranged symmetrically relative to a symmetry plane, and a rotation center line of the valve cores is located on the symmetry plane. In this way, two symmetrically arranged sealing gaskets 70 have a better position limiting effect on the valve cores, and can better prevent the valve cores from being eccentric during use. In the present embodiment, the plurality of valve ports 11 are all located at the same side of the symmetry plane, such that when the fluid flowing from the valve ports 11 into the sub-chambers 21 exerts an acting force on the valve cores, a sealing gasket located at the other side of the symmetry plane can achieve a support effect on the valve cores, and can counteract or reduce the acting force exerted by the fluid on the valve cores, thereby preventing the valve cores from being eccentric.

Each of the two sealing gaskets 70 is provided with a plurality of through holes, and the plurality of through holes and the plurality of valve ports are arranged in one-to-one correspondence. In this way, the plurality of through holes can provide clearance for the plurality of valve ports 11 to ensure the passage of the fluid. Furthermore, in this way, the two sealing gaskets 70 surround the plurality of valve ports 11, and can seal peripheral regions of the valve ports 11, thereby preventing leakage. When the fluid enters the sub-chambers 21 from the valve ports 11, the fluid may exert an acting force on the valve cores, and the acting force mainly faces the direction of the other sealing gasket. When there is only one sealing gasket, the valve cores tend to be eccentric due to the acting force of the fluid, thereby affecting the coaxiality, and easily causing leakage; whereas in the present solution, due to the existence of the two sealing gaskets, the valve cores can be supported, and the effect of the acting force of the fluid on the valve cores can be weakened, thereby preventing the valve cores from being eccentric, and preventing leakage.

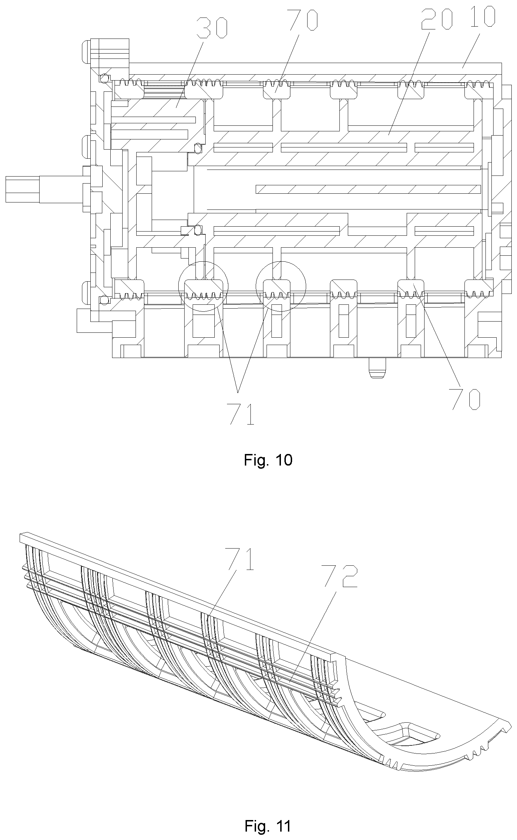

As shown in Fig. 11, a side of the sealing gasket 70 away from the valve cores is provided with a plurality of transverse raised ribs 71 arranged side by side and a plurality of longitudinal raised ribs 72 arranged side by side, wherein the transverse raised ribs 71 extend along the circumferential direction of the valve cores, the longitudinal raised ribs 72 extend along the axial direction of the valve cores, and each valve port 11 is surrounded by the transverse raised ribs 71 and the longitudinal raised ribs 72. Each valve port 11 on the inner wall of the valve chamber is surrounded by the transverse raised ribs 71 and the longitudinal raised ribs 72, such that the periphery edge of the valve port 11 is reliably sealed, which prevents the fluid from leaking from a gap on the periphery edge of the valve port 11, and ensures the sealing effect.

In some embodiments, each transverse raised rib 71 includes a plurality of first sub-ribs spaced apart from each other, and the first sub-ribs extend along the circumferential direction of the valve cores; and each longitudinal raised rib 72 includes a plurality of second sub-ribs spaced apart from each other, and the second sub-ribs extend along the axial direction of the valve cores. By arranging the plurality of first sub-ribs and the plurality of second sub-ribs, the sealing effect is further improved.

As shown in Fig. 9, first sealing ribs 23 are provided on the periphery edges of the openings of the sub-chambers 21, and the first sealing ribs 23 have a closed structure. In cases where the sub-chambers 21 are in communication with the valve ports 11, the first sealing ribs 23 on the periphery edge of the sub-chambers 21 are attached to the sealing gasket 70, and the first sealing ribs 23 are opposite the transverse raised ribs 71 and the longitudinal raised ribs 72 surrounding the valve ports 11. As the transverse raised ribs 71 and the longitudinal raised ribs 72 are raised structures and have a relatively large thickness, when the sub-chambers 21 are in communication with the valve ports 11, the sub-chambers 21 and the first sealing ribs 23 on the periphery edge thereof are opposite the transverse raised ribs 71 and the longitudinal raised ribs 72. In this way, the mutual pressure between the first sealing ribs 23 and the sealing gasket 70 is greater, which prevents a gap from being generated between the first sealing ribs 23 and the sealing gasket 70, and prevents a gap from being generated between the sealing gasket 70 and the periphery edge of the valve ports 11, thereby achieving reliable sealing.

The sealing gasket 70 includes an arcuate plate layer and a rubber layer which are connected to each other, wherein the arcuate plate layer is located between the rubber layer and the valve cores, and the rubber layer is provided with the transverse raised ribs 71 and longitudinal raised ribs 72. The arcuate plate layer may be made of plastic, and has a hardness greater than that of the rubber layer, so as to achieve a support effect; and the rubber layer has a good elastic deformation capability, thereby improving the sealing effect. A surface of the arcuate plate layer facing the valve cores is a smooth surface, so as to reduce resistance when the valve cores rotate.

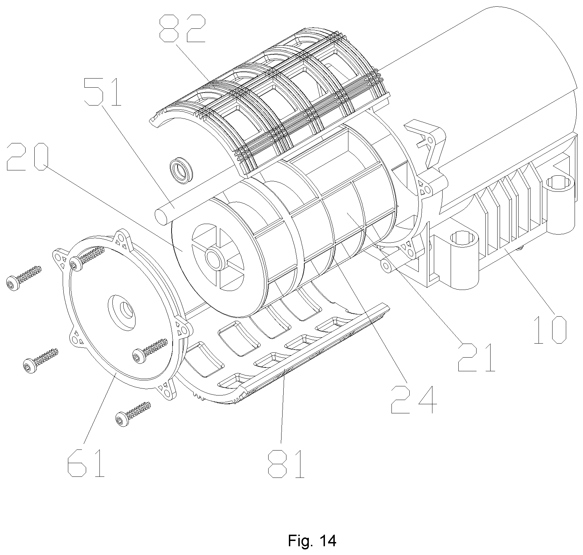

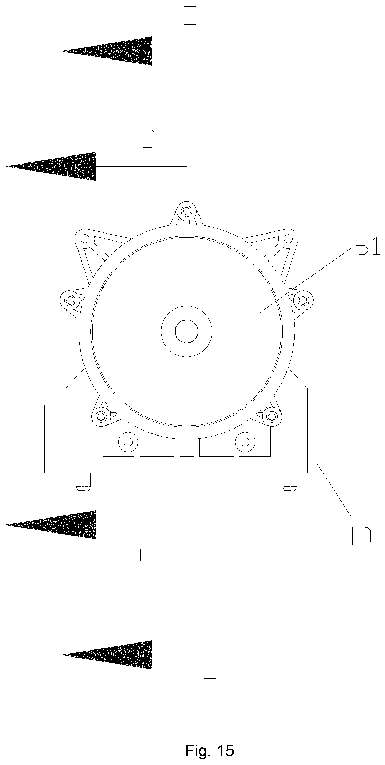

As shown in Figs. 14-20, some embodiments of the present invention provide a multi-way valve, including: a valve seat 10, the valve seat 10 being provided with a valve chamber and a plurality of valve ports 11; a first valve core 20, arranged in the valve chamber, a plurality of sub-chambers 21 being distributed in the first valve core 20, wherein when the first valve core 20 rotates, different sub-chambers 21 can be switched to be in communication with at least one corresponding valve port of the plurality of valve ports 11, respectively; and a first sub-sealing gasket 81 and a second sub-sealing gasket 82, which are oppositely arranged on an inner wall of the valve chamber, wherein the first valve core 20 is located between the first sub-sealing gasket 81 and the second sub-sealing gasket 82, and an outer peripheral surface of the first valve core 20 is in sealing fit with both the first sub-sealing gasket 81 and the second sub-sealing gasket 82.

By adopting this solution, the first sub-sealing gasket 81 and the second sub-sealing gasket 82 opposite each other are arranged in the valve seat 10, that is, sealing gaskets are provided on two opposite sides of the first valve core 20 to seal and limit the first valve core 20. Compared with the related art, the two opposite sealing gaskets have better sealing and limiting effects on the first valve core 20, and thus even if the fluid flow in the first valve core 20 is large or the rotating shaft fitted with the first valve core 20 is worn, the first valve core 20 is not easily eccentric, and therefore the fluid does not easily leak, thereby improving the sealing performance of the multi-way valve.

In the present embodiment, the first sub-sealing gasket 81 and the second sub-sealing gasket 82 are arranged symmetrically relative to a symmetry plane, a rotation center line of the first valve core 20 is located on the symmetry plane, and the plurality of valve ports 11 are all located on a same side of the symmetry plane. In this way, the two symmetrically arranged sealing gaskets have a better position limiting effect on the first valve core 20, and can better prevent the first valve core 20 from being eccentric during use. Furthermore, the first sub-sealing gasket 81 and the second sub-sealing gasket 82 are set as the same structure, which facilitates machining and assembling. As the plurality of valve ports 11 are all located at a same side of the symmetry plane, such that when fluid flowing from the valve ports 11 into the sub-chambers 21 exerts an acting force on the first valve core 20, the sealing gasket located at the other side of the symmetry plane can achieve a support effect on the first valve core 20, and can counteract or reduce the acting force exerted by the fluid on the first valve core 20, thereby preventing the first valve core 20 from being eccentric.

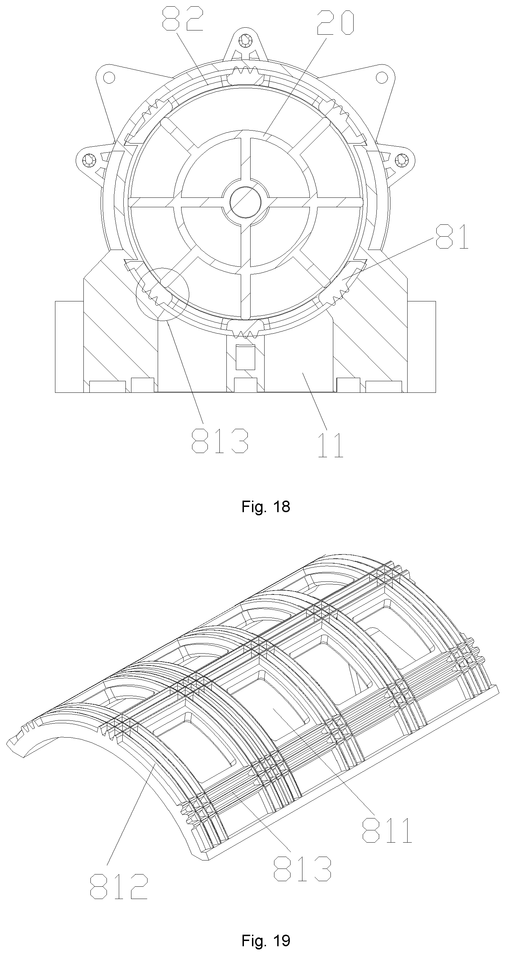

It can be determined from Figs. 14 and 19 that the first sub-sealing gasket 81 has a plurality of through-holes 811, and the plurality of through-holes 811 and the plurality of valve ports 11 are arranged in one-to-one correspondence. In this way, the plurality of through holes 811 can provide clearance for the plurality of valve ports 11 to ensure the passage of the fluid. Furthermore, in this way, the first sealing gasket 81 surrounds the plurality of valve ports 11, and can seal the peripheral regions of the valve ports 11, thereby preventing leakage. When the fluid enters the sub-chambers 21 from the valve ports 11, the fluid may exert an acting force on the first valve core 20, and the acting force mainly faces the direction of the second sub-sealing gasket 82. If the second sub-sealing gasket 82 is not provided, the first valve core 20 tends to be eccentric due to the acting force of the fluid, thereby affecting the coaxiality, and easily causing leakage; whereas in the present solution, due to the existence of the second sub-sealing gasket 82, the first valve core 20 can be supported, and the effect of the acting force of the fluid on the first valve core 20 can be weakened, thereby preventing the first valve core 20 from being eccentric, and preventing leakage.

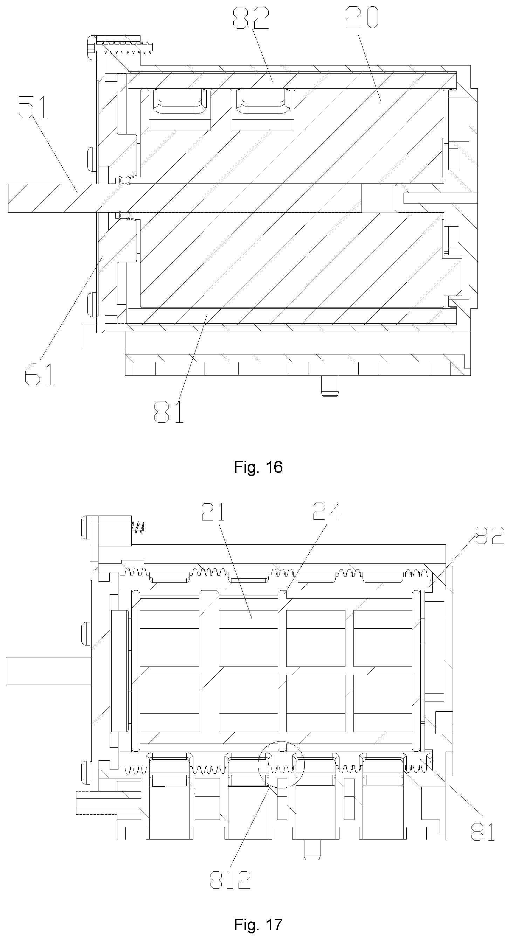

As shown in Figs. 17-19, a side of the first sub-sealing gasket 81 facing away from the first valve core 20 is provided with a plurality of sub-transverse raised ribs 812 arranged side by side and a plurality of sub-longitudinal raised ribs 813 arranged side by side, wherein the plurality of sub-transverse raised ribs 812 extend along the circumferential direction of the first valve core 20, the plurality of sub-longitudinal raised ribs 813 extend along the axial direction of the first valve core 20, and each of the plurality of valve ports 11 is surrounded by the plurality of sub-transverse raised ribs 812 and the plurality of sub-longitudinal raised ribs 813. In this way, the first sub-sealing gasket 81 faces a side of the inner wall of the valve chamber, each valve port 11 is surrounded by the sub-transverse raised ribs 812 and the sub-longitudinal raised ribs 813, such that the periphery edge of the valve port 11 is reliably sealed, which prevents the fluid from leaking from a gap on the periphery edge of the valve port 11, and ensures the sealing effect.

In some embodiments, each of the sub-transverse raised ribs 812 includes a plurality of first sub-ribs spaced apart from each other, and the first sub-ribs extend along the circumferential direction of the first valve core 20; and each of the sub-longitudinal raised ribs 813 includes a plurality of second sub-ribs spaced apart from each other, and the second sub-ribs extend along the axial direction of the first valve core 20. By arranging the plurality of first sub-ribs and the plurality of second sub-ribs, the sealing effect is further improved.

As shown in Fig. 17, third sealing ribs 24 are provided at the periphery edges of the openings of the plurality of sub-chambers 21, and in cases where the plurality of sub-chambers 21 are in communication with the valve ports 11, the third sealing ribs 24 on the periphery edge of the plurality of sub-chambers 21 are attached to the first sub-sealing gasket 81, and the third sealing ribs 24 are opposite the sub-transverse raised ribs 812 and the sub-longitudinal raised ribs 813 surrounding the plurality of valve ports 11. As the sub-transverse raised ribs 812 and the sub-longitudinal raised ribs 813 are raised structures and have a relatively large thickness, when the plurality of sub-chambers 21 are in communication with the plurality of valve ports 11, the plurality of sub-chambers 21 and the third sealing ribs 24 on the periphery edge thereof are opposite the sub-transverse raised ribs 812 and the sub-longitudinal raised ribs 813. In this way, the mutual pressure between the third sealing ribs 24 and the first sub-sealing gasket 81 is greater, which prevents a gap from being generated between the third sealing ribs 24 and the first sub-sealing gasket 81, and prevents a gap from being generated between the first sub-sealing gasket 81 and the periphery edge of the valve ports 11, thereby achieving reliable sealing.

In the present embodiment, the first valve core 20 is sequentially provided with multiple layers of circulation chambers along an axial direction thereof, and each layer of circulation chambers is divided into the plurality of sub-chambers 21 along a circumferential direction of the first valve core 20; one layer of circulation chambers is provided between any two adjacent sub-transverse raised ribs 812. By providing the multiple layers of circulation chambers in the first valve core 20, and providing a plurality of sub-chambers 21 in each layer of circulation chambers, multiple modes of flow path switching can be realized. One layer of circulation chambers is provided between any two adjacent sub-transverse raised ribs 812, such that each layer of circulation chambers can be reliably sealed by the sub-transverse raised ribs 812.

In the present embodiment, the plurality of valve ports 11 of the valve seat 10 are divided into at least two valve port groups arranged side by side, and a plurality of valve ports 11 in each of the at least two valve port groups are arranged at intervals along the axial direction of the first valve core 20; wherein one valve port group of the at least two valve port groups is arranged between any two adjacent sub-longitudinal raised ribs 813 corresponding to the first sub-sealing gasket 81 close to the valve seat 10. In this way, the plurality of parallel sub-longitudinal raised ribs 813 are arranged corresponding to the parallel valve port group, so as to ensure a sealing effect for the valve ports 11 in the valve port group.

The first sub-sealing gasket 81 includes an arcuate plate layer and a rubber layer which are connected to each other, wherein the arcuate plate layer is located between the rubber layer and the first valve core 20, and the rubber layer is provided with the plurality of sub-transverse raised ribs 812 and the plurality of sub-longitudinal raised ribs 813. The arcuate plate layer may be made of plastic, and has a hardness greater than that of the rubber layer, so as to achieve a support effect; and the rubber layer has a good elastic deformation capability, thereby improving the sealing effect. The surface of the arcuate plate layer facing the first valve core 20 is a smooth surface, so as to reduce resistance when the first valve core 20 rotates.

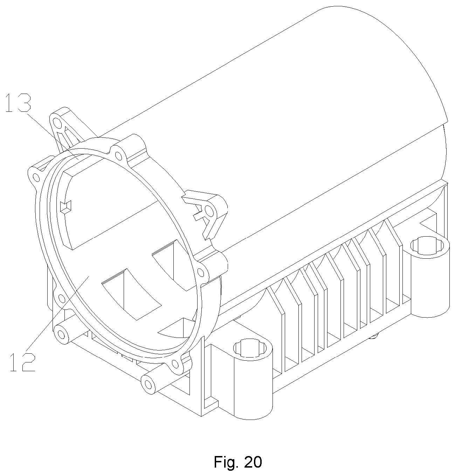

As shown in Fig. 20, the inner wall of the valve chamber is provided with a first arcuate groove 12 and a second arcuate groove 13 opposite each other, wherein the first sub-sealing gasket 81 is located in the first arcuate groove 12, and the second sub-sealing gasket 82 is located in the second arcuate groove 13. In this way, the side walls of the arcuate grooves can position and limit the sealing gaskets, thereby preventing the sealing gaskets from moving along with the first valve core 20 when the first valve core 20 rotates.

The multi-way valve further includes a rotating shaft 51 and a valve cover 61, wherein the rotating shaft 51 is configured to drive the first valve core 20 to rotate, and the valve cover 61 is connected to the valve seat 10 to block the opening of the valve chamber. The rotating shaft 51 passes through the valve cover 61, and a sealing ring is provided between the rotating shaft 51 and the valve cover 61 to prevent leakage.

For the multi-way valve provided in the present solution, the first sub-sealing gasket 81 and the second sub-sealing gasket 82 opposite each other are arranged in the valve seat 10, that is, sealing gaskets are provided on two opposite sides of the first valve core 20 to seal and limit the first valve core 20. Compared with the related art, the two opposite sealing gaskets have better sealing and limiting effects on the first valve core 20, and thus even if the fluid flow in the first valve core 20 is large or the rotating shaft fitted with the first valve core 20 is worn, the first valve core 20 is not easily eccentric, and therefore the fluid does not easily leak, thereby improving the sealing performance of the multi-way valve.

The content above merely relates to some embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. A multi-way valve, comprising:
a valve seat (10), the valve seat (10) being provided with a valve chamber and a plurality of valve ports (11);
a first valve core (20), arranged in the valve chamber, a plurality of sub-chambers (21) being distributed in the first valve core (20), wherein when the first valve core (20) rotates, different sub-chambers (21) can be switched to be in communication with at least one corresponding valve port of the plurality of valve ports (11), respectively; and
a second valve core (30), arranged in the valve chamber, the second valve core (30) being provided with a flow diversion chamber (31), the flow diversion chamber (31) being in communication with at least one of the plurality of sub-chambers (21), and wherein the flow diversion chamber (31) can be in communication with two valve ports of the plurality of valve ports (11), and when the second valve core (30) rotates, a ratio of fluid conveyed from the flow diversion chamber (31) to the two valve ports (11) in communication with the flow diversion chamber can be adjusted.

2. The multi-way valve according to claim 1, wherein the two valve ports in communication with the flow diversion chamber (31) and an opening of the flow diversion chamber (31) are all arranged along a circumferential direction of the second valve core (30), and when the second valve core (30) rotates, the ratio of fluid is adjusted by adjusting an overlapping area between the opening of the flow diversion chamber (31) and the two valve ports.

3. The multi-way valve according to claim 1, wherein the first valve core (20) is sequentially provided with multiple layers of circulation chambers along an axial direction thereof, and each layer of the circulation chambers is divided into the plurality of sub-chambers (21) along a circumferential direction of the first valve core (20); wherein at least one sub-chamber (21) of a circulation chamber adjacent to the flow diversion chamber (31) is in communication with the flow diversion chamber (31), or at least one sub-chamber (21) of a circulation chamber spaced apart from the flow diversion chamber (31) is in communication with the flow diversion chamber (31).

4. The multi-way valve according to claim 1, wherein the first valve core (20) and the second valve core (30) are coaxially arranged, the first valve core (20) has an inner passage (22) extending in an axial direction thereof, and an end of the inner passage (22) is in communication with an inlet of the flow diversion chamber (31), and at least one of the plurality of sub-chambers (21) is in communication with the inner passage (22); and the multi-way valve further comprises a first sealing ring (41), wherein the first sealing ring (41) is located between the first valve core (20) and the second valve core (30), and the first sealing ring (41) is arranged around the inner passage (22) and the inlet of the flow diversion chamber (31).

5. The multi-way valve according to claim 4, wherein an end of the first valve core (20) is provided with a first limiting ring (53), and the first limiting ring (53) penetrates into the second valve core (30), the first limiting ring (53) is provided with a first annular step, the second valve core (30) is internally provided with a second annular step, wherein a peripheral surface of the first annular step is opposite a peripheral surface of the second annular step, and a bottom surface of the first annular step is opposite a bottom surface of the second annular step; and the first sealing ring (41) is sandwiched in a region surrounded by the peripheral surface of the first annular step, the peripheral surface of the second annular step, the bottom surface of the first annular step and the bottom surface of the second annular step.

6. The multi-way valve according to claim 1, wherein the multi-way valve further comprises a rotating shaft (51) and a shaft sleeve (52), wherein a part of the rotating shaft (51) is arranged in the first valve core (20), the rotating shaft (51) passes through the second valve core (30), a part of the shaft sleeve (52) is arranged in the second valve core (30), and the shaft sleeve (52) is sleeved on the rotating shaft (51), the rotating shaft (51) is configured to drive the first valve core (20) to rotate, and the shaft sleeve (52) is configured to drive the second valve core (30) to rotate; and the multi-way valve further comprises a second sealing ring (42), wherein the second sealing ring (42) is sleeved on the rotating shaft (51), a first side of the second sealing ring (42) abuts against the first valve core (20), and a second side of the second sealing ring (42) abuts against the shaft sleeve (52) or the second valve core (30).

7. The multi-way valve according to claim 6, wherein a second limiting ring (54) is provided at an end of the first valve core (20), and the second limiting ring (54) is provided around the rotating shaft (51); the second valve core (30) is internally provided with a first hole section and a second hole section in communication with each other, and a diameter of the first hole section is greater than a diameter of the second hole section, the shaft sleeve (52) penetrates into the first hole section, an end of the shaft sleeve (52) and an end face of the second hole section are in stop fit, and the second limiting ring (54) penetrates into the second hole section; and the second sealing ring (42) is located in a region surrounded by an inner wall of the second hole section, an outer wall of the rotating shaft (51), an end face of the shaft sleeve (52) and an end face of the second limiting ring (54).

8. The multi-way valve according to claim 1, wherein the second valve core (30) comprises an outer cylinder (32), an inner cylinder (33) and a connecting plate (34), wherein the inner cylinder (33) is located in the outer cylinder (32) and is coaxially arranged with the outer cylinder (32), and the connecting plate (34) is connected to both the outer cylinder (32) and the inner cylinder (33); and the flow diversion chamber (31) comprises input chambers (311) and an output chamber (312) in communication with each other, wherein a region between an outer surface of the inner cylinder (33), an inner surface of the outer cylinder (32) and the connecting plate (34) form the input chambers (311), the input chambers (311) are in communication with at least one of the plurality of sub-chambers (21), and the output chamber (312) is located in a side wall of the outer cylinder (32), an opening of the output chamber (312) is located on an outer surface of the outer cylinder (32), and the output chamber (312) can be in communication with two of the plurality of valve ports (11).

9. The multi-way valve according to claim 8, wherein the connecting plate (34) comprises a first plate body (341) and a second plate body (342) which are arranged in parallel, wherein the first plate body (341) and the second plate body (342) are connected to two sides of the inner cylinder (33) respectively, and the first plate body (341) and the second plate body (342) are both connected to the inner surface of the outer cylinder (32); and there are two input chambers (311), and the two input chambers (311) are oppositely arranged with respect to a plane where the first plate body (341) and the second plate body (342) are located.

10. The multi-way valve according to claim 8, wherein the second valve core (30) further comprises a sealing plate (35) and a partition plate (36), wherein the sealing plate (35) blocks a side of the outer cylinder (32) facing away from the first valve core (20); and the partition plate (36) is located in the output chamber (312), and the partition plate (36) divides the output chamber (312) into two parts.

11. The multi-way valve according to claim 1, wherein the multi-way valve further comprises a sealing gasket (70), wherein the sealing gasket (70) is arranged on an inner wall of the valve chamber, first sealing ribs (23) are provided on periphery edges of openings of the sub-chambers (21), and in cases where the sub-chambers (21) are in communication with the valve ports (11), the first sealing ribs (23) on the periphery edge of the sub-chambers (21) abut against the sealing gasket (70); and a second sealing rib (37) is provided at periphery edge of an opening of the flow diversion chamber (31), and the second sealing rib (37) at the periphery edge of the flow diversion chamber (31) is attached to the sealing gasket (70).

12. The multi-way valve according to claim 1, wherein the multi-way valve further comprises:
a first sub-sealing gasket (81) and a second sub-sealing gasket (82), which are oppositely arranged on an inner wall of the valve chamber, wherein the first valve core (20) is located between the first sub-sealing gasket (81) and the second sub-sealing gasket (82), and periphery edges of openings of the plurality of sub-chambers (21) are in sealing fit with both the first sub-sealing gasket (81) and
the second sub-sealing gasket (82).

13. The multi-way valve according to claim 12, wherein the first sub-sealing gasket (81) and the second sub-sealing gasket (82) are arranged symmetrically relative to a symmetry plane, a rotation center line of the first valve core (20) is located on the symmetry plane, and the plurality of valve ports (11) are all located on a same side of the symmetry plane.

14. The multi-way valve according to claim 12, wherein the first sub-sealing gasket (81) has a plurality of through-holes (811), and the plurality of through-holes (811) and the plurality of valve ports (11) are arranged in one-to-one correspondence.

15. The multi-way valve according to claim 12, wherein a side of the first sub-sealing gasket (81) facing away from the first valve core (20) is provided with a plurality of sub-transverse raised ribs (812) arranged side by side and a plurality of sub-longitudinal raised ribs (813) arranged side by side, wherein the plurality of sub-transverse raised ribs (812) extend along a circumferential direction of the first valve core (20), the plurality of sub-longitudinal raised ribs (813) extend along an axial direction of the first valve core (20), and each of the plurality of valve ports (11) is surrounded by the plurality of sub-transverse raised ribs (812) and the plurality of sub-longitudinal raised ribs (813).

16. The multi-way valve according to claim 15, wherein third sealing ribs (24) are provided at the periphery edges of the openings of the plurality of sub-chambers (21), and in cases where the plurality of sub-chambers (21) are in communication with the plurality of valve ports (11), the third sealing ribs (24) on the periphery edge of the plurality of sub-chambers (21) are attached to the first sub-sealing gasket (81), and the third sealing ribs (24) are opposite the sub-transverse raised ribs (812) and the sub-longitudinal raised ribs (813) surrounding the plurality of valve ports (11).

17. The multi-way valve according to claim 15, wherein the plurality of valve ports (11) of the valve seat (10) are divided into at least two valve port groups arranged side by side, and a plurality of valve ports (11) in each of the at least two valve port groups are arranged at intervals along the axial direction of the first valve core (20); wherein one valve port group of the at least two valve port groups is arranged between any two adjacent sub-longitudinal raised ribs (813) corresponding to the first sub-sealing gasket (81) close to the valve seat (10).

18. The multi-way valve according to claim 15, wherein the first sub-sealing gasket (81) comprises an arcuate plate layer and a rubber layer which are connected to each other, wherein the arcuate plate layer is located between the rubber layer and the first valve core (20), and the rubber layer is provided with the plurality of sub-transverse raised ribs (812) and the plurality of sub-longitudinal raised ribs (813).

19. The multi-way valve according to claim 12, wherein the inner wall of the valve chamber is provided with a first arcuate groove (12) and a second arcuate groove (13) opposite each other, wherein the first sub-sealing gasket (81) is located in the first arcuate groove (12), and the second sub-sealing gasket (82) is located in the second arcuate groove (13).
